# EUROPEAN PATENT APPLICATION

(11) **EP 2 290 884 A1**
(43) Date of publication of application: **02.03.2011**
(21) Application number: 09797401.8
(22) Date of filing: 17.07.2009
(51) Int. Cl.: H04L 12/56

(54) **METHOD, TERMINAL AND SYSTEM FOR IMPLEMENTING ADDRESS RESOLUTION OF SERVICE SERVER**

(30) Priority: 17.07.2008 CN 200810133568
(71) Applicant: Huawei Technologies Co., Ltd., Longgang District, Shenzhen Guangdong 518129 (CN); China Mobile Communications Corporation, Beijing 100032 (CN)
(72) Inventor: WANG, Lei, Shenzhen Guangdong 518129 (CN); LIN, Huasheng, Beijing 100032 (CN); BI, Yana, Beijing 100032 (CN); YANG, Jian, Shenzhen Guangdong 518129 (CN); WEI, Bing, Beijing 100032 (CN); LIU, Xuri, Shenzhen Guangdong 518129 (CN); WU, Bo, Beijing 100032 (CN); LIN, Qingchun, Shenzhen Guangdong 518129 (CN); ZHANG, Jinhao, Shenzhen Guangdong 518129 (CN); CHEN, Guoqiao, Shenzhen Guangdong 518129 (CN); LUO, Yaoping, Shenzhen Guangdong 518129 (CN)
(74) Representative: Thun, Clemens
(86) International application number: PCT/CN2009/072804
(87) International publication number: WO 2010/006554

(57) **Abstract**

A method, terminal, and system for resolving application server addresses are provided. The method for resolving application server addresses includes: obtaining home information; adding the home information to a DNS request to obtain a home DNS request, where the DNS request carries a Uniform Resource Locator (URL) domain name; sending the home DNS request to a DNS server; and receiving an Internet Protocol (IP) address of a home application server corresponding to the home DNS request, from the DNS server. Through the method, system, and apparatus provided herein, the terminal sends a home DNS request according to the home information, and accesses the home application server according to the IP address of the home application server corresponding to the home DNS request, where the IP address is returned by the DNS server. Therefore, the terminal can access the home application server according to service requirements.

## Description

This application claims priority to Chinese Patent Application No. 200810133568.5, filed with the Chinese Patent Office on July 17, 2008 and entitled "Method and Terminal for Resolving Service Platform Addresses", which is incorporated herein by reference in its entirety.

### Field of the Invention

The present invention relates to communications technologies, and in particular, to a method, terminal, and system for resolving application server addresses.

### Background of the Invention

With the development of communications technologies, the Internet is more and more important in the daily life. A host on the Internet may be identified in many modes, for example, identified by a Uniform Resource Locator (URL) domain name or an Internet Protocol (IP) address. A URL domain name such as cnn.com and www.yahoo.com scarcely includes information about the location of a host on the Internet, but an IP address such as 192.158.100.011 corresponds to the information about the location of a host in the Internet. The URL domain name is mnemonic, but the IP address is composed of digits and thus is hard to understand or memorize. Therefore, people generally access a host by using the corresponding URL domain name.

To access a host by using a URL domain name, a user needs to search out the IP address corresponding to the URL domain name through a DNS server of the Internet, and the browser then accesses an application server according to the IP address.

Currently, in a service based on Wireless Application Protocol (WAP), the application server may be accessed in WAP Gateway (GW) proxy mode. That is, the WAP GW initiates a DNS resolution process to the DNS server on behalf of a client. In such access mode, the IP address of the existing WAP GW is preset in the client; or the application server is not accessed in WAP GW proxy mode. That is, the client accesses the DNS server directly, and the DNS server resolves the address of the application server and returns it to the client.

In the process of implementing the present invention, the inventor finds the prior art has at least the following disadvantages that: For a service in which an application server is accessed in WAP GW proxy mode, if the address of a WAP GW changes, a client is unable to access the service normally; for a service in which an application server is not accessed in WAP GW proxy mode , the application server address obtained by a DNS server after resolution according to a domain name is the address of a visited application server. Therefore, the client accesses the visited application server directly according to the address of the visited application server, where the address is obtained by the DNS server after resolution, but the client cannot select the home application server to provide services.

### Summary of the Invention

Embodiments of the present invention provide a method, terminal and system for resolving application server addresses to enable a terminal to access a home application server according to service requirements.

A method for resolving application server addresses in an embodiment of the present invention includes:
obtaining home information;
adding the home information to a DNS request to obtain a home DNS request, where the DNS request carries a URL domain name;
sending the home DNS request to a DNS server; and
receiving an IP address of a home application server corresponding to the home DNS request, from the DNS server.

A terminal provided in an embodiment of the present invention includes:
a home information obtaining module, configured to obtain home information of the terminal;
a DNS request module, configured to: add the home information obtained by the home information obtaining module to a DNS request to obtain a home DNS request according to service requirements, where the DNS request carries a URL domain name; and
an information exchanging module, configured to send the home DNS request obtained by the DNS request module to a DNS server, and receive an IP address of a home application server corresponding to the home DNS request, from the DNS server.

A system for resolving application server addresses in an embodiment of the present invention includes:
a terminal, configured to: obtain home information, and add the home information to a DNS request to obtain a home DNS request, where the DNS request carries a URL domain name; send the home DNS request to a DNS server; and receive an IP address of a home application server corresponding to the home DNS request, from the DNS server; and
the DNS server, configured to: receive the home DNS request from the terminal, search out the IP address of the home application server corresponding to the home DNS request, and return the IP address to the terminal.

By using the technical solution in embodiments of the present invention, the terminal sends a home DNS request according to the home information, and accesses the home application server according to the IP address of the home application server corresponding to the home DNS request, where the IP address is returned by the DNS server. Therefore, the terminal can access the home application server according to service requirements.

### Brief Description of the Drawings

FIG. 1 is a flowchart of a method for resolving application server addresses in Embodiment 1 of the present invention;
FIG. 2 is a flowchart of a method for resolving application server addresses in Embodiment 2 of the present invention; and
FIG. 3 shows a structure of a terminal in Embodiment 3 of the present invention.

### Detailed Description of the Embodiments

For a service in which an application server is not accessed in WAP GW proxy mode, a DNS server resolves and obtains the addresses of a home application server and a visited application server according to the domain name. According to existing protocols, the client accesses the visited application server directly, and cannot select the home application server to provide services. The services in which an application server is not accessed in WAP GW proxy mode include but are not limited to the Push to talk over Cellular (PoC) service, video sharing service, and Assisted-Global Positioning System (AGPS).

To enable a client (also called a terminal hereinafter) to access the home application server according to service requirements, a terminal may implement the service by using the method provided herein.

### Embodiment 1

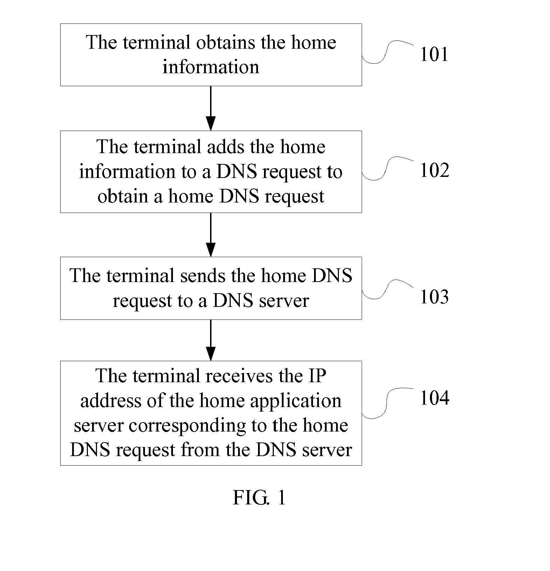

As shown in FIG. 1, a method for resolving application server addresses includes the following steps:
Step 101: The terminal obtains the home information.

The terminal may obtain the home information from its user identity. The user identity may include, but is not limited to, an International Mobile Subscriber Identity (IMSI) or a Mobile Subscriber ISDN Number (MSISDN). The home information may be, but is not limited to, the home area code of the terminal. For example, if the home area of the terminal is Beijing, the home information may be the area code "010" of Beijing, or, if the home area is Shenzhen, the home information may be the area code "0755" of Shenzhen.

Step 102: The terminal adds the home information to a DNS request to obtain a home DNS request according to the service requirements, where the DNS request carries a URL domain name.

Specifically, the terminal adds the home information, in a specified format, to the URL domain name carried in the DNS request, and obtains a home URL domain name.

The specified format may be, but is not limited to: The terminal uses the home information as information of a leaf node of the space corresponding to the URL domain name, and adds the home information to the URL domain name. The space corresponding to the URL domain name is called a domain name space. A domain name space is a distributed database of a layered tree structure, and the host is located on the leaf of the tree. A complete URL domain name consists of an order sequence of node identifiers on the path from a node of the tree to the root node of the tree. The node identifiers are separated by a dot ".". For example, a URL domain name is home.weather.com. The home information is added to the URL domain name as the information about the leaf node of the space corresponding to the URL domain name. For example, if the home information is "010" and the URL domain name is home.weather.com, the home URL domain name is "010.home.weather.com".

Step 103: The terminal sends the home DNS request to the DNS server.

The address of the DNS server may be obtained from the network when the terminal is activated, or the address may be preset on the terminal.

Step 104: The terminal receives the IP address of the home application server corresponding to the home DNS request, from the DNS server.

The DNS server searches out the IP address of the home application server corresponding to the home DNS request according to the home URL domain name that carries the home information by using the existing domain name resolution method, and returns the IP address to the terminal. The terminal accesses the home application server according to the obtained IP address.

By using the technical solution in this embodiment, the terminal sends a home DNS request according to the home information, and accesses the home application server according to the IP address of the home application server corresponding to the home DNS request, where the IP address is returned by the DNS server. Therefore, the terminal can access the home application server according to service requirements.

### Embodiment 2

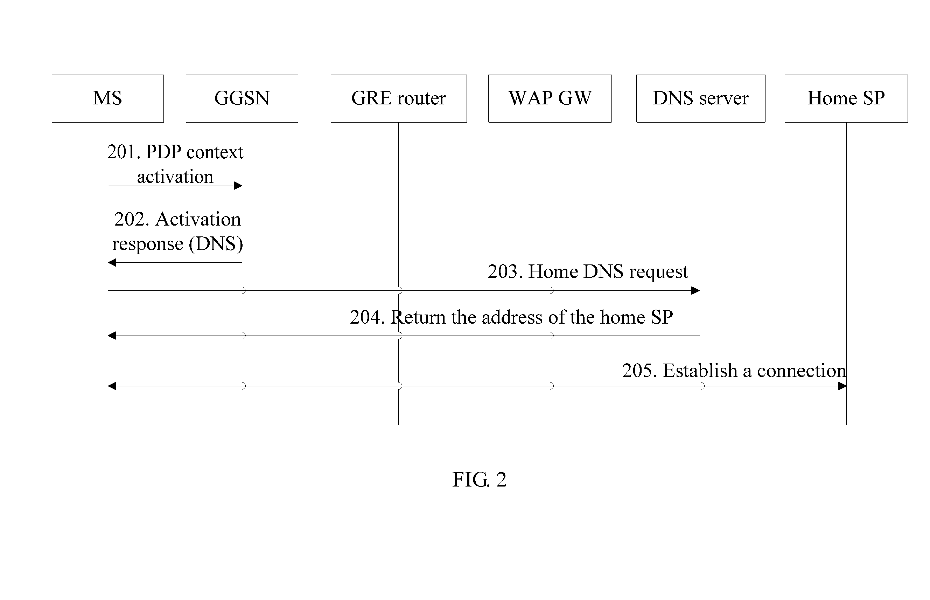

This embodiment applies the method of Embodiment 1 to practical networking. As shown in FIG. 2, a Gateway General Packet Radio Service (GPRS) Support Node (GGSN) serves as an access apparatus of the wireless network; a Generic Routing Encapsulation (GRE) router is a device for accessing the core network; and a WAP GW serves as a GW in the networking but does not access the application server (Service Provider, SP) by using a proxy.

The application scenario of this embodiment is as follows: A service of the Mobile Station (MS) requires access to the home application server. For example, a Beijing user roams to Shanghai, but still wants to know the weather forecast of Beijing. As shown in FIG. 2, the method for resolving application server addresses includes the following steps:
Step 201: The MS activates a Packet Data Protocol (PDP) context.
Step 202: The GGSN pushes the address of the DNS server to the MS by means of an activation response.
Step 201 and step 202 are optional. The MS may use a preset address of the DNS server.
Step 203: When a service is in progress on the MS, the MS sends a home DNS request to the DNS server through a GRE router. The MS may construct a home DNS request by adding the home information before the URL domain name of the DNS request according to the service requirements.

After obtaining the home information from the IMSI or MSISDN, the MS processes the home information and adds it, in a specified format, to the URL domain name of the DNS request to generate a URL that carries the home information. The home URL carried in the home DNS request may be "home information + URL domain name". For example, if the service is "weather forecast for the home area of the user", the home information obtained by the MS is "010", and the URL domain name of the weather forecast service for the home area is "home.weather.com", the URL domain name may be "010. home.weather.com" after the home information is added to the URL domain name of the DNS request.

Step 204: The DNS server returns the address of the SP to the MS.

The DNS server searches out the IP address of the home SP of the MS according to the received URL domain name that carries the home information of the MS.

Step 205: The MS establishes a connection to the home SP according to the IP address of the home SP that is returned by the DNS server.

By using the technical solution in this embodiment, the MS sends a home DNS request according to the home information, and accesses the home application server according to the IP address of the home application server corresponding to the home DNS request, where the IP address is returned by the DNS server. Therefore, the MS can access the home application server according to service requirements to watch the weather forecast of Beijing.

### Embodiment 3

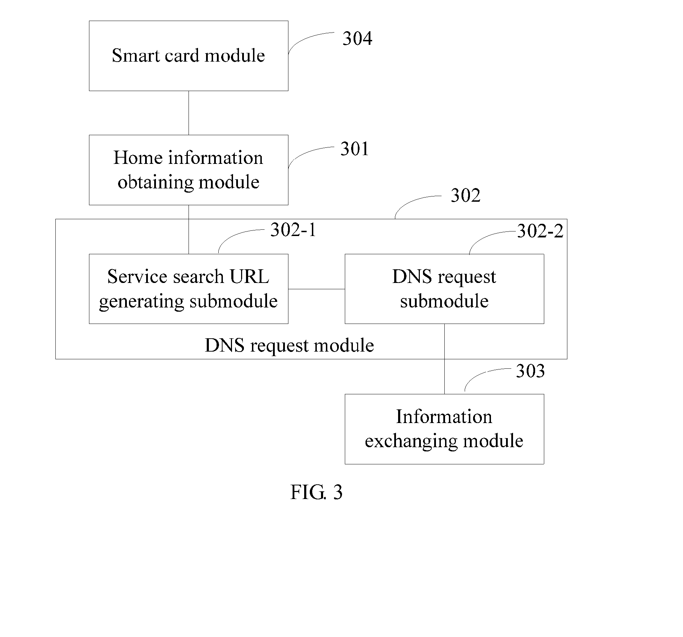

A terminal is provided in this embodiment. The terminal is an entity that performs the method for resolving application server addresses in Embodiment 1 and the Embodiment 2 above. As shown in FIG. 3, the terminal may include:
a home information obtaining module 301, configured to obtain home information of the terminal; and
a DNS request module 302, configured to add the home information obtained by the home information obtaining module 301 to a DNS request to obtain a home DNS request according to service requirements, where the DNS request carries a URL domain name; and
an information exchanging module 303, configured to send the home DNS request obtained by the DNS request module 302 to a DNS server, and receive an IP address of a home application server corresponding to the home DNS request, from the DNS server.

Further, the terminal may include:
a smart card module 304, configured to store a user identity of the terminal.

Accordingly, the home information obtaining module 301 is configured to obtain home information from the user identity stored in the smart card module 304.

Further, the DNS request module 302 may include:
a service search URL generating submodule 302-1, configured to add the home information obtained by the home information obtaining module 301 to a URL domain name to obtain a home URL domain name according to service requirements; and
a DNS request submodule 302-2, configured to: send a DNS request according to the home URL domain name generated by the service search URL generating submodule 302-1, and obtain a home DNS request.

By using the technical solution in this embodiment, the home information obtaining module obtains the home information of the terminal, and the DNS request module sends a home DNS request according to the home information, and accesses the home application server according to the IP address of the home application server corresponding to the home DNS request, where the IP address is returned by the DNS server. Therefore, the terminal can access the home application server according to service requirements to watch the weather forecast of Beijing.

Based on the foregoing embodiments, persons skilled in the art are clearly aware that the embodiments of the present invention may be implemented through hardware, or through software in addition to a necessary universal hardware platform. Therefore, the contributions made by the technical solution in embodiments of the present invention as against the prior art may be partially or completely embodied in a software product. The software product may be stored in a storage medium such as a Read Only Memory/Random Access Memory (ROM/RAM), a magnetic disk, or a Compact Disk-Read Only Memory (CD-ROM), and incorporates several instructions for instructing a computer device (for example, a personal computer, a server, or a network device) to execute the method specified in any embodiment of the present invention or a part of the embodiment.

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall within the scope of protection defined by the following claims or their equivalents.

## Claims

1. A method for resolving application server addresses, comprising:
obtaining home information;
adding the home information to a DNS request to obtain a home DNS request, wherein the DNS request carries a Uniform Resource Locator (URL) domain name;
sending the home DNS request to a DNS server; and
receiving an Internet Protocol (IP) address of a home application server corresponding to the home DNS request, from the DNS server.

2. The method according to claim 1, wherein the step of obtaining the home information comprises:
obtaining the home information from a user identity of a terminal.

3. The method according to claim 2, wherein:
the user identity comprises an International Mobile Subscriber Identity (IMSI) or a Mobile Subscriber ISDN Number (MSISDN).

4. The method according to claim 1, wherein the step of adding the home information to the DNS request comprises:
adding the home information to the URL domain name carried in the DNS request to obtain a home URL domain name.

5. The method according to claim 4, wherein the step of adding the home information to the URL domain name carried in the DNS request comprises:
using the home information as information of a leaf node of a space corresponding to the URL domain name, and adding the home information to the URL domain name.

6. The method according to any one of claims 1-5, wherein:
the home information is a home area code of the terminal.

7. A terminal, comprising:
a home information obtaining module, configured to obtain home information of the terminal;
a DNS request module, configured to add the home information obtained by the home information obtaining module to a DNS request to obtain a home DNS request according to service requirements, wherein the DNS request carries a Uniform Resource Locator (URL) domain name; and
an information exchanging module, configured to send the home DNS request obtained by the DNS request module to a DNS server, and receive an Internet Protocol (IP) address of a home application server corresponding to the home DNS request, from the DNS server.

8. The terminal according to claim 7, further comprising a smart card module, wherein:
the smart card module is configured to store a user identity of the terminal; and
the home information obtaining module is configured to obtain the home information from the user identity stored in the smart card module.

9. The terminal according to claim 7 or claim 8, wherein the DNS request module comprises:
a service search URL generating submodule, configured to add the home information obtained by the home information obtaining module to the URL domain name to obtain a home URL domain name; and
a DNS request submodule, configured to send the DNS request according to the home URL domain name generated by the service search URL generating submodule, and obtain the home DNS request.

10. A system for resolving application server addresses, comprising:
a terminal, configured to obtain home information, and add the home information to a DNS request to obtain a home DNS request, wherein the DNS request carries a Uniform Resource Locator (URL) domain name; send the home DNS request to a DNS server; and receive an Internet Protocol (IP) address of a home application server corresponding to the home DNS request, from the DNS server; and wherein
the DNS server, configured to receive the home DNS request from the terminal, search out the IP address of the home application server corresponding to the home DNS request, and return the IP address to the terminal.
